# EUROPÄISCHE PATENTSCHRIFT

(11) **EP 0 581 087 B1**
(45) Veröffentlichungstag und Bekanntmachung des Hinweises auf die Patenterteilung: **24.09.1997**
(21) Anmeldenummer: 93111043.1
(22) Anmeldetag: 09.07.1993
(51) Int. Cl.: H04M 11/00

(54) **Verfahren zum Darstellen teilnehmerindividueller Daten beim Übertragen von Signalisierungssignalen und Nachrichtensignalen zwischen Schmalbandnetzen und ATM- Netzen**
Method for representing subscriber's individual data when transmitting signalling signals and information signals between narrow band networks and ATM-networks
Méthode pour représenter des données individuelles d'abonné lors de la transmission de signaux de signalisation et de signaux d'information entre des réseaux à bande étroite et des réseaux ATM

(30) Priorität: 31.07.1992 DE 4225389
(43) Veröffentlichungstag der Anmeldung: 02.02.1994
(73) Patentinhaber: SIEMENS AKTIENGESELLSCHAFT, 80333 München (DE)
(72) Erfinder: Rombach, Horst, D-80335 München (DE)

(56) Entgegenhaltungen:
- EP-A- 0 406 780
- DE-C- 3 917 169
- DE-C- 3 942 275

## Beschreibung

Die Erfindung betrifft ein Verfahren gemäß dem Oberbegriff des Patentanspruchs 1.

Die Komplexität von Kommunikationssystemen, insbesondere im Bürobereich, hat während ihres Entwicklungsprozesses stetig zugenommen. Dies liegt insbesondere daran, daß die Kommunikationsbedürfnisse sowie die Kommunikationswege sich aufgrund neuer Organisationsstrukturen grundlegend gewandelt haben, und demzufolge neue Leistungsmerkmale und Dienste in die Kommunikationssysteme implementiert werden mußten. So haben beispielsweise Kommunikationssysteme, die zur Bürokommunikation eingesetzt werden, in den letzten Jahren für die angeschlossenen Teilnehmer Möglichkeiten eröffnet, auf unterschiedlichen Ebenen unter Benutzung einer Vielzahl von Leistungsmerkmalen und Diensten miteinander zu kommunizieren. So wurde die bis dahin existierende Kommunikationsform 'SPRACHE' um Leistungsmerkmale, wie 'WAHLWIEDERHOLUNG', 'ANRUFUMLEITUNG', 'KURZWAHL', etc. erweitert, sowie neue Dienste, wie 'TELEFAX', 'BILDÜBERTRAGUNG', etc. eingeführt. Wurden ursprünglich zur Bereitstellung dieser neuen Leistungsmerkmale und Dienste eigene Netze und Kommunikationssysteme verwendet, so hat sich in den letzten Jahren die Verwendung und Übertragung der diese Leistungsmerkmale und Dienste repräsentierenden Daten in einem Netz durchgesetzt. Die mit dieser Integration verbundenen Ideen sind eng mit dem Begriff ISDN (Integrated Services Digital Network) verbunden. Damit können jetzt Daten in einem Netz auf einer Leitung und unter einer Rufnummer übertragen werden.

Neue Dienste, wie beispielsweise die Bildübertragung, erfordern aber neue Übertragungsverfahren. So werden Daten zur Bildübertragung als Paketdaten zum Endteilnehmer übertragen. Die Übertragung und Durchschaltung von Paketdaten geschieht allerdings auf grundlegend andere Weise, wie dies bei der herkömmlichen 64 kbit/s-Übertragung durchgeführt wurde. Um die Vielzahl der von der herkömmlichen Technik bereitgestellten Leistungsmerkmale und Dienste weiterbenutzen zu können, wurden daher Netze zur Paketvermittlung in die bestehenden 64 kbit/s-Netze eingebettet. Der Übergang zwischen beiden Netzen erfolgt über sogenannte "Interworking Units".

Manche Leistungsmerkmale und Dienste erfordern aber ein besonders komplexes Zusammenspiel der sie realisierenden Daten und Prozeduren, so daß ein Auslagern derselben auf an die Kommunikationssysteme angeschlossene Datensysteme erfolgt. Diese sogenannten "Host-Rechner" enthalten zum einen die soeben erwähnten Daten, wie z. B. teilnehmerindividuelle Daten, zum anderen gelangen dort Prozeduren - auch Applikationen genannt - zum Ablauf, die die Daten bearbeiten und dem Kommunikationssystem die aufbereiteten Daten zur Verfügung stellen. Aus NTZ, Band 43 (1990), Heft 11, "Computer Supported Telephony Application (CSTA), Telekommunikation und DV im Duett", sind beispielsweise solche Applikationen bekannt. Problematisch bei derartigen Verfahren ist, daß die Verbindungsleitung zwischen "Host-Rechner" und Kommunikationssystem sehr schnell überlastet ist, was letztendlich in einem hohen Steuerungsaufwand für die Datenübertragung über diese Verbindungsleitung resultiert. Darüber hinaus resultiert jeder zusätzliche Steuerungsaufwand in einer erhöhten Ausfallwahrscheinlichkeit.

Der Erfindung liegt die Aufgabe zugrunde, teilnehmerindividuelle Daten einem ATM-Kommunikationsendgerät mit weitaus geringerem Steuerungsaufwand zuzuführen.

Die Erfindung wird ausgehend vom Oberbegriff des Patentanspruchs 1 durch dessen kennzeichnende Merkmale gelöst.

Die wesentlichen Merkmale der Erfindung sind in der Auswertung der Teilnehmernummer des rufenden munikationsendgerätes des Schmalbandkommunikationssystems im ATM-Kommunikationsendgerät zu sehen. Dazu werden vor der Übertragung über das ATM-Netz die die Signalisierungssignale und Nachrichtensignale eines rufenden kommunikationsendgerätes des Schmalbandkommmunikationssystems enthaltenden zwei B-Kanäle und der D-Kanal in den Informationsteil von Zellen eingefügt. Die im D-Kanal enthaltene Teilnehmernummer des rufenden Schmalbandkommunikationsendgerätes des Schmalbandkommunikationssystems ist damit ebenfalls im Informationsteil der Zellen enthalten. Im ATM-Kommunikationsendgerät werden dann durch eine entsprechend ausgestaltete Schaltungsanordnung diese übertragenen Zellen wieder depaketiert und die Teilnehmernummer dem D-Kanal entnommen. In Abhängigkeit von dieser Teilnehmernummer werden Speicherbereiche einer Datenbank adressiert. Dabei wird tabellarisch eine Zuordnung zwischen der Teilnehmernummer des rufenden Schmalbandkommunikationsendgerätes und der Speicheradresse der Datenbank, unter der entsprechende teilnehmerindividuelle Daten abgespeichert sind, hergestellt. Der Vorteil des erfindungsgemäßen Verfahrens ist insbesondere darin zu sehen, daß damit Datenanwendungen in ATM-Kommunikationsendgeräten möglich sind. Damit ist ein direkter Zugriff zu in Datenbanken abgelegten Daten, die bisher über separate Datennetze übertragen werden, möglich.

In den Unteransprüchen sind nähere Ausgestaltungen der Erfindung aufgezeigt.

In den Ansprüchen 2 und 3 ist erläutert, wie die Teilnehmernummer des rufenden Schmalbandkommunikationsendgerätes entnommen wird, die jeweiligen teilnehmerindividuellen Daten ausgelesen und im ATM-Kommunikationsendgerät zur Anzeige gebracht werden. Die Realisierung dieses Verfahrens erfolgt über Prozeduren und eine Tabelle.

Gemäß Anspruch 4 ist eine gesonderte Schaltungsanordnung vorgesehen, in der diese Prozeduren ablaufen.

Anspruch 5 gibt eine weitere Ausgestaltung der Erfindung wieder. Bei dieser ist vorgesehen, daß die die teilnehmerindividuellen Daten enthaltende Datenbank eine integrale Einheit des jeweiligen ATM-Kommunikationsendgerät ist. Durch eine derartige Ausgestaltung wird, entgegen dem Stand der Technik, kein zentraler Host-Rechner benötigt. Weiterhin wird vermieden, daß der Ausfall desselben zu einer Blockierung einer Mehrzahl von Kommunikationsendgeräten führt.

Gemäß Anspruch 6 ist eine Datenbank vorgesehen, die als unabhängige Einheit an die jeweiligen ATM-Kommunikationsendgeräte anschließbar ist.

Im Anspruch 7 ist eine besonders einfache Form eines ATM-Kommunikationssystems aufgezeigt. Dabei wird vorzugsweise ein sogenanntes 'Cross Connect'-System verwendet. Darunter versteht man ein Vermittlungssystem, dessen Durchschaltewege beispielsweise mit einem Personal Computer fest einstellbar sind. Eine Auswertung der Signalisierungsinformation, die üblicherweise als Kriterium für den Durchschalteweg in einem Vermittlungssystem benutzt wird, erfolgt hier nicht.

Im folgenden wird das erfindungsgemäße Verfahren anhand eines Ausführungsbeispiels näher erläutert.

Es zeigen
- FIG 1: eine Übersicht über ein Schmalbandnetz und ein ATM-Netz, und
- FIG 2: die Prozeduren, die zur Realisierung des erfindungsgemäßen Verfahrens im ATM-Kommunikationsendgerät ablaufen.

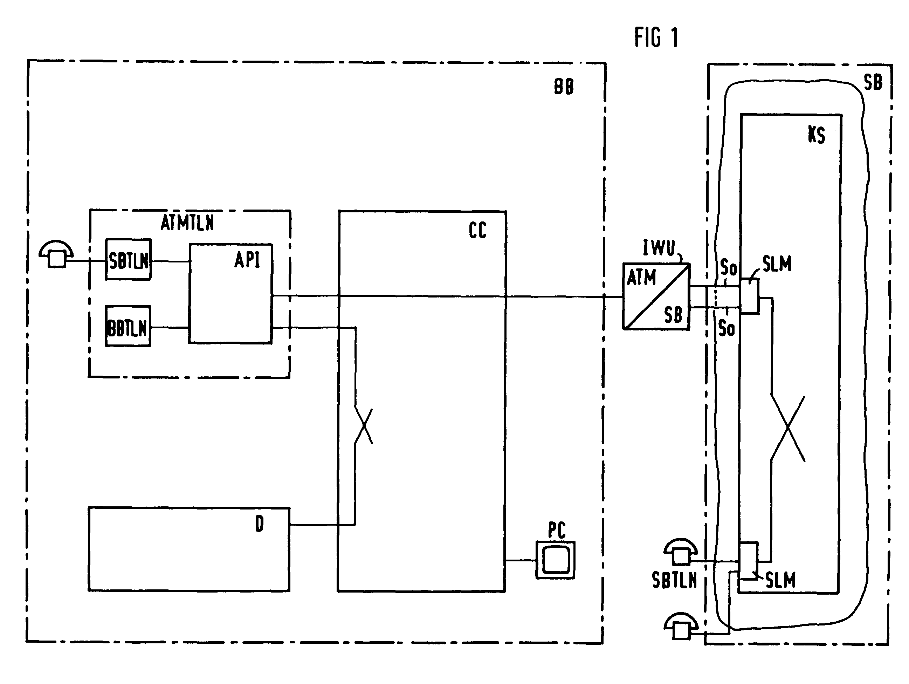

In FIG 1 ist die Verbindung eines Schmalbandnetzes SB mit einem ATM-Netz BB aufgezeigt. Das Schmalbandnetz SB enthält wenigstens ein Schmalbandkommunikationssystem KS, in FIG 1 ist lediglich eines dieser Systeme dargestellt. Hieran sind Schmalbandkommunikationsendgeräte SBTLN angeschlossen. Die Anschaltung der Schmalbandkommunikationsendgeräte erfolgt über Teilnehmeranschlußbaugruppen SLM. Die Teilnehmeranschlußbaugruppen SLM bilden genormte Teilnehmerschnittstellen S_{O}. An wenigstens eine dieser Teilnehmerschnittstellen S_{O} ist eine Netzübergangseinheit IWU angeschlossen. Die von einem Schmalbandkommunikationsendgerät SBTLN ausgehenden Signalisierungssignale und Nachrichtensignale werden über eine solche Teilnehmerschnittstelle S_{O} in zwei ISDN-B-Kanälen und einem D-Kanal übertragen. An der jeweiligen Teilnehmerschnittstelle werden die B-Kanäle und der zugehörige D-Kanal entweder über separate Leitungen oder im Zeitmultiplex über eine gemeinsame Leitung übertragen.

Weiterhin ist an die jeweilige Netzübergangseinheit IWU das ATM-Netz BB herangeführt. Im ATM-Netz BB sind beispielsweise in Knotenpunkten ATM-Kommunikationssysteme mit daran angeschlossenen ATM-Kommunikationsendgeräten ATMTLN installiert, wobei lediglich eines dieser ATM-Kommunikationsendgeräte dargestellt ist. Ein ATM-Kommunikationsendgerät ATMTLN besteht beispielsweise aus einem bandanteil SBTLN, beispielsweise in Form einer Fernsprecheinrichtung, sowie einem Breitbandanteil BBTLN mit einem Bildschirm. Das dargestellte ATM-Kommunikationsendgerät ATMTLN ist über eine Schaltungsanordnung API an das ATM-Kommunikationssystem herangeführt und weiterhin über eine Koppelanordnung des ATM-Kommunikationssystems mit einer Datenbank D verbindbar. Die Datenbank D weist eine Vielzahl von Speicherbereichen auf, in denen teilnehmerindividuelle Daten der Schmalbandkommunikationsgeräte SBTLN gespeichert sind und ist dem betreffenden ATM-Kommunikationsendgerät individuell zugeordnet.

Teilnehmerindividuelle Daten können beispielsweise Daten über Umsätze der letzten Monate, Firmenzugehörigkeit, Arbeitsbereiche, etc. sein.

Beim erfindungsgemäßen Verfahren wird davon ausgegangen, daß ein Verbindungswunsch von Seiten eines an das bandkommunikationssystem KS angeschlossenen munikationsendgerätes besteht. Aufgrund der gewünschten Verbindung werden Verbindungswege durch das Koppelfeld des Schmalbandkommunikationssystems KS zu der durch die Signalisierungssignale festgelegten Teilnehmeranschlußbaugruppe SLM geschaltet. Die Übertragung der vom Schmalbandkommunikationsendgerät zu der mit dieser verbundenen Netzübergangseinheit IWU gesendeten Signalsierungssignale und Nachrichtensignale erfolgt dann in zwei B-Kanälen und einem D-Kanal. In der betreffenden Netzübergangseinheit IWU werden die Signalisierungssignale und Nachrichtensignale in Zellen paketiert. Dies geschieht derart, daß Signalisierungssignale und Nachrichtensignale in die Informationsteile von Zellen eingefügt werden. Die Übertragung dieser Zellen durch das ATM-Netz BB erfolgt dann beispielsweise über wenigstens ein' Cross Connect'-System CC. Das 'Cross Connect'-System CC wird über für das Bedienpersonal zugängliche Personal Computer PC fest eingestellt. Damit sind keine Auswerteprozeduren zur Ermittlung des Durchschalteweges erforderlich.

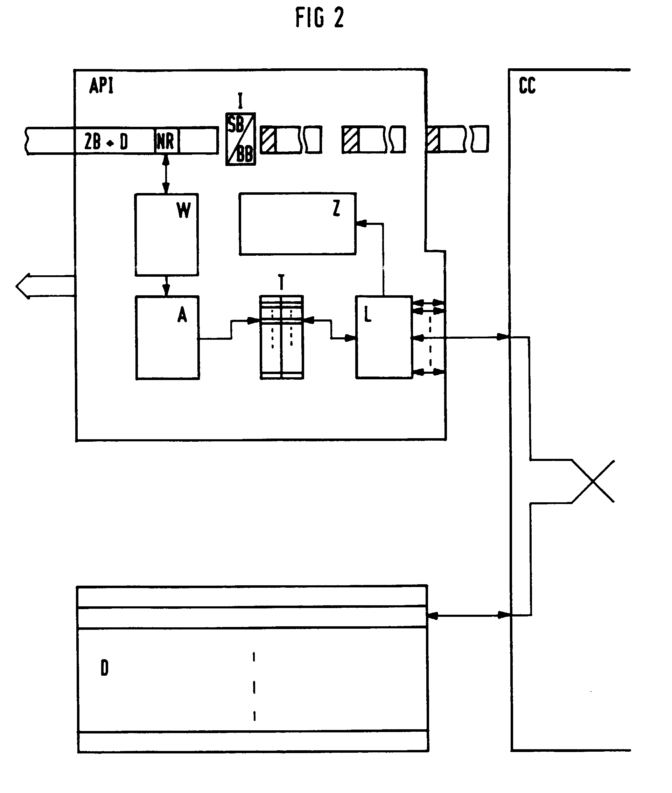

In FIG 2 sind die das erfindungsgemäße Verfahren realisierenden renden Prozeduren aufgezeigt. Die paketierten Zellen vom 'Cross Connect'-System CC nach der Durchschaltung zu einem für die jeweilige Verbindung in Frage kommenden ATM-Kommunikationsendgerät ATMTLN hin gesendet. Die Schnittstelle des ATM-Kommunikationsendgerätes ATMTLN zum 'Cross Connect'-System CC bildet eine Schnittstellenbaugruppe API. Hier werden die paketierten Zellen depaketiert und die in den Informationsteilen enthaltenen Daten in zwei B-Kanälen und einem D-Kanal zum Schmalbandanteil SBTLN des ATM-Kommunikationsendgerätes ATMTLN weitergeleitet. Eine in der API-Schnittstellenbaugruppe ablaufende Auswerteprozedur W übernimmt die im D-Kanal übertragene Teilnehmernummer des Schmalbandkommunikationsendgerätes und übergibt diese einer Adressierungsprozedur A bzw. Dekodiereinrichtung. Die Adressierungsprozedur A adressiert damit eine Tabelle T, in der eine Zuordnung der jeweiligen Teilnehmernummer zu einer Datenbankadresse enthalten ist. Die Adressierungsprozedur A übergibt einer Leseprozedur L die derart aufgefundene Datenbankadresse. In Abhängigkeit von dieser Datenbankadresse adressiert die Leseprozedur L über eine Koppeleinrichtung des 'Cross Connect'-Systems CC den in Frage kommenden Speicherbereich der dem jeweiligen ATM-Kommunikationsendgerät zugeordneten Datenbank D, liest die dort abgelegten teilnehmerindividuellen Daten aus und übergibt dieselben einer Anzeigeprozedur Z. Diese bringt die soeben ausgelesenen Daten auf einem Bildschirm des Breitbandanteils BBTLN des ATM-Kommunikationsendgerätes ATMTLN zur Anzeige. Die teilnehmerindividuelle Daten enthaltende Datenbank D kann integraler Bestandteil des ATM-Kommunikationsendgerätes ATMTLN sein. In diesem Fall entfällt die Datenübertragung über das 'Cross Connect'-System CC.

## Patentansprüche

1. Verfahren zum Darstellen teilnehmerindividueller Daten beim Übertragen von Signalisierungssignalen und richtensignalen zwischen Schmalbandnetzen und ATM-Netzen mit
- einem Schmalbandnetz (SB) mit wenigstens einem Schmalbandkommunikationssystem (KS), an das über Teilnehmeranschlußleitungen Schmalbandkommunikationsendgeräte (SBTLN) schlossen sind, wobei die Übertragung von Signalisierungssignalen und Nachrichtensignalen über die Teilnehmeranschlußleitungen in zwei B-Kanälen und einem D-Kanal erfolgt, über welchen im Zuge eines Verbindungsaufbaus u. a. die Teilnehmernummer (NR) eines rufenden bandkommunikationsendgerätes übertragen wird,
- einem ATM-Netz (BB) mit wenigstens einem ATM-Kommunikationssystem mit daran angeschlossenen, jeweils aus einem Schmalbandanteil (SBTLN) und einem Breitbandanteil (BBTLN) bestehenden ATM-Kommunikationsendgeräten (ATMTLN) und in dem Signalisierungssignale und Nachrichtensignale in Form von Signalisierungszellen bzw. Nachrichtenzellen übertragen werden, sowie
- mit wenigstens einer Netzübergangseinheit (IWU), die die in B-Kanälen und dem jeweils zugängigen D-Kanal auftretenden Signalisierungssignale und Nachrichtensignale in Zellen, jeweils bestehend aus einem Zellenkopf und einem Informationsteil, paketiert,
**dadurch gekennzeichnet,**
daß die Teilnehmernummer (NR) eines rufenden kommunikationsendgerätes (SBTLN) des Schmalbandnetzes (SB) im Zuge eines gewünschten Verbindungsaufbaus über eine genormte Schnittstelle (S_{O}) im D-Kanal einer für die treffende Verbindung in Frage kommenden Netzübergangseinheit (IWU) übergeben wird, durch welche die von dem betreffenden Schmalbandkommunikationsendgerät abgegebenen Signalisierungssignale und Nachrichtensignale in die Informationsteile von Zellen eingefügt werden und die derart paketierten Signalisierungssignale und Nachrichtensignale über fest durchgeschaltete Verbindungen des ATM-Netzes zu einem für die betreffende Verbindung in Frage kommenden gerufenen ATM-Kommunikationsendgerät (ATMTLN) übertragen werden,
daß in dem ATM-Kommunikationsendgerät die Zellen depaketiert werden und eine Auswertung der Teilnehmernummer (NR) des rufenden Schmalbandkommunikationsendgerätes (SBTLN) durch eine Auswerteprozedur (W) durchgeführt wird,
daß in Abhängigkeit von dieser Teilnehmernummer (NR) ein Speicherbereich einer zu dem betreffenden ATM-Kommunikationsendgerät zugeordneten Datenbank (D) adressiert wird, der teilnehmerindividuelle Daten des rufenden kommunikationsendgerätes enthält,
und daß dieselben ausgelesen und zur Anzeige in dem betreffenden ATM-Kommunikationsendgerät (ATMTLN) gebracht werden.

2. Verfahren nach Anspruch 1,
**dadurch gekennzeichnet**,
daß eine Adressierungsprozedur (A) von der Auswerteprozedur (W) die Teilnehmernummer (NR) des rufenden kommunikationsendgerätes (SBTLN) zugeführt erhält und in Abhängigkeit von derselben eine Tabelle (T) adressiert, von der auf eine Ansteuerung hin eine entsprechende Speicherbereichsadresse der Datenbank bereitgestellt wird.

3. Verfahren nach Anspruch 2,
**dadurch gekennzeichnet,**
daß eine Leseprozedur (L) unter der bereitgestellten Speicherbereichsadresse die teilnehmerindividuellen Daten des rufenden Schmalbandkommunikationsendgerätes entnimmt und diese einer Anzeigeprozedur (Z) übergibt, die die betreffenden Daten auf einem Bildschirm des ATM-Kommunikationsendgerätes (ATMTLN) zur Anzeige bringt.

4. Verfahren nach einem der vorhergehenden Ansprüche,
**dadurch gekennzeichnet,**
daß die Auswerteprozedur (W), die Adressierungsprozedur (A), die Leseprozedur (L) und die Anzeigeprozedur (Z) in einer in dem jeweiligen ATM-Kommunikationsendgerät (ATMTLN) enthaltenen Schaltungsanordnung (API) ablaufen.

5. Verfahren nach einem der vorhergehenden Ansprüche,
**dadurch gekennzeichnet,**
daß die Datenbank (D) eine integrale Einheit des jeweiligen ATM-Kommunikationsendgerätes (ATMTLN) ist.

6. Verfahren nach einem der Ansprüche 1 bis 4,
**dadurch gekennzeichnet,**
daß die Datenbank (D) als unabhängige Einheit über das ATM-Netz an das jeweilige ATM-Kommunikationsendgerät (ATMTLN) anschließbar ist.

7. Verfahren nach einem der vorhergehenden Ansprüche,
**dadurch gekennzeichnet,**
daß für das jeweilige ATM-Kommunikationssystem (ATMTLN) ein Cross Connect-System (CC) mit fest einstellbaren Durchschaltewegen benutzt wird.

## Claims

1. Method for representing subscriber-individual data during the transmission of signalling signals and information signals between narrow-band networks and ATM networks, comprising
- a narrow-band network (SB) having at least one narrow-band communication system (KS) to which narrow-band communication terminals (SBTLN) are connected via subscriber lines, signalling signals and information signals being transmitted via the subscriber lines in two B channels and one D channel via which during the setting up of a connection, among other things, the subscriber number (NR) of a calling narrow-band communication terminal is transmitted,
- an ATM network (BB) having at least one ATM communication system with ATM communication terminals (ATMTLN) connected thereto consisting in each case of a narrow-band component (SBTLN) and a broad-band component (BBTLN) and in which signalling signals and information signals are transmitted in the form of signalling cells or information cells, respectively, and
- having at least one interworking unit (IWU) which packetizes the signalling signals and information signals occurring in B channels and the respective accessible D channel into cells in each case consisting of a cell header and an information section,
characterized in that the subscriber number (NR) of a calling narrow-band communication terminal (SBTLN) of the narrow-band network (SB) is transferred, during the setting up of a desired connection, via a standardized interface (S₀) in the D channel to an interworking unit (IWU) suitable for the relevant connection, by means of which unit the signalling signals and information signals output by the relevant narrow-band communication terminal are inserted into the information sections of cells and the signalling signals and information signals packeted in this manner are transmitted via permanently through-connected connections of the ATM network to a called ATM communication terminal (ATMTLN) suitable for the relevant connection,
that in the ATM communication terminal, the cells are depacketized and an analysis of the subscriber number (NR) of the calling narrow-band communication terminal (SBTLN) by an analyzing procedure (W) is carried out,
that in dependence on this subscriber number (NR), a memory area of a database (D) allocated to the relevant ATM communication terminal is addressed which contains subscriber-individual data of the calling narrow-band communication terminal,
and that these data are read out and are displayed at the relevant ATM communication terminal (ATMTLN).

2. Method according to Claim 1, characterized in that an addressing procedure (A) is supplied with the subscriber number (NR) of the calling narrow-band communication terminal (SBTLN) by the analyzing procedure (W) and, in dependence on this number, addresses a table (T) by which, following an activation, a corresponding memory area address of the database is provided.

3. Method according to Claim 2, characterized in that a read procedure (L) takes the subscriber-individual data of the calling narrow-band communication terminal under the provided memory area address and transfers these data to a display procedure (Z) which displays the relevant data on a screen of the ATM communication terminal (ATMTLN).

4. Method according to one of the preceding claims, characterized in that the analyzing procedure (W), the addressing procedure (A), the read procedure (L) and the display procedure (Z) run in a circuit arrangement (API) contained in the respective ATM communication terminal (ATMTLN).

5. Method according to one of the preceding claims, characterized in that the database (D) is an integral unit of the respective ATM communication terminal (ATMTLN).

6. Method according to one of Claims 1 to 4, characterized in that the database (D), as an independent unit, can be connected to the respective ATM communication terminal (ATMTLN) via the ATM network.

7. Method according to one of the preceding claims, characterized in that a cross-connect system (CC) with permanently settable through-connect paths is used for the respective ATM communication system (ATMTLN).

## Revendications

1. Procédé de représentation de données spécifiques à des abonnés lors de la transmission de signaux de signalisation et de signaux d'information entre des réseaux à bande étroite et des réseaux à mode de transfert asynchrone, comportant
- un réseau (SB) à bande étroite ayant au moins un système (KS) de communication à bande étroite, auquel sont raccordés, par l'intermédiaire de lignes de raccordement d'abonnés, des terminaux (SBTLN) de communication à bande étroite, la transmission de signaux de signalisation et de signaux d'information s'effectuant, par l'intermédiaire des lignes de raccordement d'abonnés, dans deux canaux B et un canal D, par l'intermédiaire desquels, à la suite d'un établissement de liaison, est transmis entre autres le numéro (NR) d'abonné d'un terminal appelant de communication à bande étroite,
- un réseau (BB) à mode de transfert asynchrone comportant au moins un système de communication à mode de transfert asynchrone, auquel sont raccordés des terminaux (ATMTLN) de communication à mode de transfert asynchrone, constitués chacun d'une partie (SBTLN) à bande étroite et d'une partie (BBTLN) à large bande, et dans lequel sont transmis des signaux de signalisation et des signaux d'information sous forme de cellules de signalisation et de cellules d'information, ainsi que
- au moins une unité (IWU) de transition de réseaux, qui met en paquets dans des cellules, constituées chacune d'un en-tête de cellule et d'une partie d'information, les signaux de signalisation et des signaux d'information apparaissant dans des canaux B et dans le canal D associé,
caractérisé en ce que
le numéro (NR) d'abonné d'un terminal (SBTLN) appelant de communication à bande étroite du réseau (SB) à bande étroite est, à la suite d'un établissement de liaison souhaité, transmis dans le canal D, par l'intermédiaire d'une interface (S₀) normalisée, à une unité (IWU) de transition de réseaux qui est concernée par la liaison en question et par laquelle les signaux de signalisation et les signaux d'information fournis par le terminal de communication à bande étroite concerné sont insérés dans les parties d'information de cellules et les signaux de signalisation et les signaux d'information ainsi mis en paquet transmis, par l'intermédiaire de liaisons du réseau à mode de transfert asynchrone interconnectées de manière fixe, à un terminal (ATMTLN) de communication à mode de transfert asynchrone appelé, concerné par la liaison en question,
en ce que les cellules sont dépaquetées dans le terminal de communication à mode de transfert asynchrone et en ce qu'une évaluation du numéro (NR) d'abonné du terminal (SBTLN) appelant de communication à bande étroite est effectuée par une procédure (W) d'évaluation, en ce que, en fonction de ce numéro (NR) d'abonné, une zone de mémoire d'une banque (D) de données, qui est associée au terminal de communication à mode de transfert asynchrone concerné et qui contient des données spécifiques aux abonnés du terminal appelant de communication à bande étroite est adressée,
et en ce que ces données sont lues et affichées dans le terminal (ATMTLN) de communication a mode de transfert asynchrone concerné.

2. Procédé suivant la revendication 1,
caractérisé en ce que
une procédure (A) d'adressage reçoit de la procédure (W) d'évaluation le numéro (NR) d'abonné du terminal (SBTLN) appelant de communication à bande étroite et, en fonction de ce numéro d'abonné, adresse une table (T), par laquelle, à la suite d'une commande, une adresse de zone de mémoire correspondante est mise à disposition de la banque de données.

3. Procédé suivant la revendication 2,
caractérisé en ce que
une procédure (L) de lecture prélève à l'adresse de zone de mémoire préparée les données spécifiques aux abonnés du terminal appelant de communication à bande étroite et les transmet à une procédure (Z) d'affichage, qui fait s'afficher les données concernées sur un écran du terminal (ATMTLN) de communication à mode de transfert asynchrone.

4. Procédé suivant l'une des revendications précédentes,
caractérisé en ce que
la procédure (W) d'évaluation, la procédure (A) d'adressage, la procédure (L) de lecture et la procédure (Z) d'affichage se déroulent dans un montage (API) contenu dans le terminal (ATMTLN) de communication à mode de transfert asynchrone associé.

5. Procédé suivant l'une des revendications précédentes,
caractérisé en ce que
la banque (D) de données fait partie intégrante du terminal (ATMTLN) de communication à mode de transfert asynchrone associé.

6. Procédé suivant l'une des revendications 1 à 4,
caractérisé en ce que
la banque (D) de données peut, par l'intermédiaire du réseau à mode de transfert asynchrone, être raccordée comme unité indépendante au terminal (ATMTLN) de communication à mode de transfert asynchrone associé.

7. Procédé suivant l'une des revendications précédentes,
caractérisé en ce que
l'on utilise pour le terminal (ATMTLN) de communication à mode de transfert asynchrone associé un système (CC) d'interconnexion ayant des voies d'interconnexion pouvant être établies de manière fixe.
